# EUROPÄISCHE PATENTANMELDUNG

(11) **EP 2 147 822 A2**
(43) Veröffentlichungstag der Anmeldung: **27.01.2010**
(21) Anmeldenummer: 09165942.5
(22) Anmeldetag: 21.07.2009
(51) Int. Cl.: B60Q 1/00

(54) **Scheinwerfer für ein Kraftfahrzeug**

(30) Priorität: 22.07.2008 DE 102008034040
(71) Anmelder: Hella KGaA Hueck & Co., 59552 Lippstadt (DE)
(72) Erfinder: Zymelka, Andreas, 59065, Hamm (DE)

(57) **Zusammenfassung**

Die vorliegende Erfindung betrifft eine Beleuchtungseinrichtung (1) für ein Kraftfahrzeug mit einem Gehäuse (2), in dem wenigstens ein elektrisches Bauelement (3) aufgenommen und das durch wenigstens ein elektrisches Mittel (4) betreibbar ist. Erfindungsgemäß ist vorgesehen, dass innerhalb des Gehäuses (2) der Beleuchtungseinrichtung (1) eine Aufnahmevorrichtung (5) vorgesehen ist, mit der das elektrische Mittel (4) mechanisch aufnehmbar und elektrisch mit dem elektrischen Bauelement (3) kontaktierbar ist.

## Beschreibung

Die vorliegende Erfindung richtet sich auf eine Beleuchtungseinrichtung für ein Kraftfahrzeug mit einem Gehäuse, in dem wenigstens ein elektrisches Bauelement aufgenommen und das durch wenigstens ein elektrisches Mittel betreibbar ist.

Eine derartige Beleuchtungseinrichtung für ein Kraftfahrzeug ist aus der DE 199 42 729 A1 bekannt. Die in dem Gehäuse der Beleuchtungseinrichtung aufgenommenen elektrischen Bauelemente können als Lampen ausgebildet sein, die beispielsweise als Abblendlicht, als Fernlicht, als Nebellicht, als Kurvenlicht, als Positionslicht oder als Blinklicht wirken. Weiterhin kann das elektrische Bauelement eine Streuscheibenheizung, einen Leuchtweitensteller, einen Sensor oder dergleichen aufweisen, wobei die elektrischen Bauelemente jeweils durch elektrische Mittel betreibbar sind. Der Betrieb betrifft die Ansteuerung der elektrischen Bauelemente, beispielsweise benötigt eine Lampe, die als Xenon-Leuchtmittel ausgeführt ist, ein Hochspannungs-Vorschaltgerät. Das elektrische Mittel ist in einem quaderförmigen Gehäuse angeordnet, das rastend am Gehäuse der Beleuchtungseinrichtung gehalten wird. Zu diesem Zweck weist das quaderförmige Gehäuse seitlich abragende Rastelemente auf, wobei auch eine Verschraubung des quaderförmigen Gehäuses des elektrischen Mittels an das Gehäuse der Beleuchtungseinrichtung möglich ist. Eine bekannte Anordnung eines elektrischen Mittels an der Außenseite des Gehäuses der Beleuchtungseinrichtung betrifft das Vorschaltgerät zum Betrieb eines Xenon-Leuchtmittels, wobei das Vorschaltgerät ein Aluminiumgehäuse besitzt und an der Unterseite oder in der Nähe des Gehäuses der Beleuchtungseinrichtung angeordnet wird. Das elektrische Mittel im separaten Gehäuse ist sehr widrigen Witterungsverhältnissen ausgesetzt, wobei das separate Gehäuse zur Beleuchtungseinrichtung eine elektrische Leitungsanordnung erfordert, um die elektrische Verbindung zwischen dem elektrischen Mittel und dem Bauelement in der Beleuchtungseinrichtung herzustellen. Hierfür sind wiederum Dichtungsanforderungen zu erfüllen, um beispielsweise eine Verkabelung in das Gehäuse hinein- und herauszuführen. Insbesondere Aluminiumgehäuse für Xenon-Vorschaltgeräte besitzen den Nachteil, dass sich aufgrund von starken Temperaturänderungen im Gehäuse selbst Niederschlag bilden kann, der zum Ausfall des elektrischen Mittels führen kann. Weitere elektrische Mittel betreffen Steuereinheiten für Kurvenlichtstelleinrichtungen, wobei auch Umschalteinrichtungen für Fern- und Abblendlicht sowie Sensorik und Aktorik in separaten Gehäusen untergebracht sind, um die Bauelemente im Gehäuse der Beleuchtungseinrichtung anzusteuern oder zu betreiben.

Es ist daher die Aufgabe der vorliegenden Erfindung, eine Beleuchtungseinrichtung für ein Kraftfahrzeug zu schaffen, die die Probleme des vorgenannten Standes der Technik überwindet und eine verbesserte Anordnung der elektrischen Mittel aufweist.

Diese Aufgabe wird ausgehend von einer Beleuchtungseinrichtung für ein Kraftfahrzeug gemäß dem Oberbegriff des Anspruchs 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass innerhalb des Gehäuses der Beleuchtungseinrichtung eine Aufnahmevorrichtung vorgesehen ist, mit der das elektrische Mittel mechanisch aufnehmbar und elektrisch mit dem elektrischen Bauelement kontaktierbar ist.

Die Erfindung geht dabei von dem Gedanken aus, dass das elektrische Mittel in das Gehäuse der Beleuchtungseinrichtung selbst integriert wird. Um eine Integration des oder der elektrischen Mittel innerhalb des Gehäuses der Beleuchtungseinrichtung sinnvoll umzusetzen, ist eine Aufnahmevorrichtung vorgesehen, die die elektrischen Mittel mechanisch aufnehmen kann, wobei durch die mechanische Aufnahme selbst die elektrische Verbindung mit dem elektrischen Bauelement herstellbar ist. Die Aufnahmevorrichtung ist fester Bestandteil der Beleuchtungseinrichtung, und kann innerhalb des Gehäuses der Beleuchtungseinrichtung dauerhaft befestigt sein. Die elektrischen Mittel sind in Abhängigkeit von der Ausführung der Beleuchtungseinrichtung wahlweise in der Aufnahmevorrichtung aufnehmbar, so dass eine Konfektionierung der Beleuchtungseinrichtung mit den notwendigen elektrischen Mitteln jederzeit vorgenommen und geändert werden kann. Im Ergebnis werden lediglich eine elektrische Leistungsversorgung und eine elektrische Verbindung zum Bordnetz des Kraftfahrzeugs aus dem Gehäuse der Beleuchtungseinrichtung herausgeführt. Weitere elektrische Verbindungen zwischen dem Gehäuse der Beleuchtungseinrichtung und dem externen Bordnetz des Kraftfahrzeuges entfällt aufgrund der erfindungsgemäßen Anordnung der elektrischen Mittel innerhalb des Gehäuses der Beleuchtungseinrichtung.

Es ist von Vorteil, dass die Aufnahmevorrichtung mehrere Steckaufnahmeplätze aufweist, um nach Art und Anzahl der in der Beleuchtungseinrichtung eingebrachten elektrischen Bauelemente zu diesen korrespondierende elektrische Mittel in der Aufnahmevorrichtung einzubringen. Diese Art der Aufnahme von elektrischen Mitteln ist aus Personalcomputern bereits bekannt, wobei die Aufnahmevorrichtung eine Hauptplatine (Motherboard) betrifft, die eine Anzahl von Steckaufnahmeplätzen (PCMCIA) aufweist, in die elektrische Mittel einrastbar sind. Die Steckaufnahmeplätze sind untereinander gleich, so dass elektrische Mittel verschiedener Funktion in jeden der Steckaufnahmeplätze eingesetzt werden können. Im Rahmen der vorliegenden Erfindung können alternativ die Steckaufnahmeplätze zumindest teilweise spezifisch ausgeführt sein, da beispielsweise ein Xenon-Vorschaltgerät eine Hochspannung aufweist und ein hierfür vorgesehener Steckaufnahmeplatz andere Spezifikationen besitzt als beispielsweise der Steckaufnahmeplatz eines elektrischen Moduls zur Ansteuerung eines Kurvenlichts.

Die Aufnahmevorrichtung kann an der Innenwand des Gehäuses der Beleuchtungseinrichtung angeordnet werden. Gewöhnlich besitzen die Gehäuse von Beleuchtungseinrichtungen eine Servicekappe zum Verschließen einer Serviceöffnung. Durch die beispielsweise das Leuchtmittel in der Beleuchtungseinrichtung manuell getauscht werden kann. Die Aufnahmevorrichtung kann innerhalb des Gehäuses der Beleuchtungseinrichtung derart angeordnet sein, dass zumindest die Steckaufnahmeplätze der Aufnahmevorrichtung manuell durch die Serviceöffnung erreichbar sind, so dass ein Austausch eines in der Aufnahmevorrichtung aufgenommenen elektrischen Mittels durch die Serviceöffnung ermöglicht ist.

Ferner kann das Gehäuse eine separate vom Hauptinnenraum der Beleuchtungseinrichtung getrennte Kammer aufweisen, in der die Aufnahmevorrichtung zur Aufnahme der elektrischen Mittel eingebracht ist. Die Kammer kann von der Außenseite der Beleuchtungseinrichtung über eine separate Öffnung erreichbar sein, die einen verschließbaren Deckel besitzen kann. Die getrennte Kammer ist gemäß dieser Ausführungsform zwar vom Hauptinnenraum des Gehäuses der Beleuchtungseinrichtung getrennt, jedoch ist die Aufnahmevorrichtung physisch im Gehäuse der Beleuchtungseinrichtung selbst aufgenommen, da die getrennte Kammer prinzipiell nicht außenseitig an das Gehäuse der Beleuchtungseinrichtung angeordnet ist.

Eine mögliche Ausführungsform der Beleuchtungseinrichtung betrifft einen Scheinwerfer des Kraftfahrzeugs, wobei das elektrische Bauelement als ein Leuchtmittel, eine Kurvenlichtstelleinrichtung, eine Umschalteinrichtung für Fern- und Abblendlicht, eine Sensor- und/oder eine Aktoreinheit oder dergleichen ausgeführt ist. Betrifft das Leuchtmittel beispielsweise ein Xenon-Leuchtmittel, kann wenigstens eines der elektrischen Mittel ein Vorschaltgerät zum Betrieb des Xenon-Leuchtmittels betreffen. Ist der Scheinwerfer hingegen mit einem Dioden-Leuchtmittel ausgestattet, betrifft das elektrische Mittel entsprechend eine Elektronikeinheit zum Betrieb des Dioden-Leuchtmittels. Je nach Ausführung der Beleuchtungseinrichtung kann diese eine Vielzahl von verschiedenen elektrischen Funktionen aufweisen, so dass entsprechend der notwendigen Ansteuerung der Einzelfunktionen die Aufnahmevorrichtung mit der Anzahl der elektrischen Mittel konfektioniert wird, die jeweils als elektronische Steckkarte ausgeführt sind.

Ist die Beleuchtungseinrichtung mit einem geringeren Funktionsumfang ausgestattet, so können einzelne Steckaufnahmeplätze der Aufnahmevorrichtung auch im Betrieb der Beleuchtungseinrichtung frei bleiben. Beispielsweise betrifft die Kurvenlichtfunktion eines Scheinwerfers bei vielen Automobilherstellen eher eine Zusatzausstattung, so dass das elektrische Bauelement eine Kurvenlichteinheit umfasst, die nur optional in die Beleuchtungseinrichtung eingebaut wird. Das elektrische Mittel ist als Elektronikeinheit zum Betrieb der Kurvenlichteinheit ausgeführt, wobei die Elektronikeinheit nicht in der Aufnahmevorrichtung aufgenommen wird, wenn der Scheinwerfer keine Kurvenlichtfunktion erfüllt.

Alternativ kann die Beleuchtungseinrichtung als Rückleuchte eines Kraftfahrzeugs ausgeführt sein, wobei das elektrische Mittel zum Betrieb der Rückleuchte oder einzelner Funktionen in der Rückleuchte dient. Es sind Rückleuchten bekannt, die mit verschiedenen Lichtfunktionen ausgeführt sein können. Rückleuchten neuerer Bauart können Dioden-Module besitzen, wobei zum Betrieb der Dioden-Module elektrische Mittel erforderlich sind, und innerhalb der Rückleuchte erfindungsgemäß eine Aufnahmevorrichtung eingebracht sein kann, in die optional die elektrischen Mittel eingesetzt werden können.

Um eine elektrische Verbindung zwischen der Aufnahmevorrichtung und den elektrischen Bauelementen innerhalb der Beleuchtungseinrichtung herzustellen, ist eine elektrische Leitungsanordnung innerhalb des Gehäuses der Beleuchtungseinrichtung vorgesehen. Die Aufnahmevorrichtung und die elektrische Leitungsanordnung können fest innerhalb der Beleuchtungseinrichtung eingebracht sein, so dass bei Austausch eines elektrischen Mittels aus der Aufnahmevorrichtung die elektrische Leitungsanordnung unbeeinflusst bleiben kann.

Um die elektrischen Mittel sicher in der Aufnahmevorrichtung aufzunehmen, sind ein erstes und ein zweites Rastmittel vorgesehen, die zur sicheren Aufnahme der elektrischen Mittel in der Aufnahmevorrichtung dienen. Eines der beiden Rastmittel kann manuell bedienbar sein, in dem dieses beispielsweise zwischen einer Öffnungsposition und einer Schließposition bewegbar ist. Das zweite Rastmittel ist ein starres Rastmittel, so dass eine Aufnahme der elektrischen Mittel in den Steckaufnahmeplätzen der Aufnahmevorrichtung ermöglicht ist, die eine Ein-Hand-Bedienung erlaubt, um im Inneren der Beleuchtungseinrichtung einen Wechsel der elektrischen Mittel zu ermöglichen.

Ferner besitzen die elektrischen Mittel eine Kontaktschiene, über die eine elektrische Kontaktierung mit der Aufnahmevorrichtung ermöglicht ist, wobei der elektrische Kontakt in der Kontaktschiene durch die Rastmittel gehalten ist. Damit erfolgt sowohl eine mechanische als auch eine elektrische Aufnahme der elektrischen Mittel innerhalb der Aufnahmevorrichtung, so dass nach der mechanischen Aufnahme eine weitere elektrische Kontaktierung nicht notwendig ist.

Weitere, die Erfindung verbessernde Maßnahmen sind nachstehend gemeinsam mit der Beschreibung eines bevorzugten Ausführungsbeispiels der Erfindung anhand der Figuren näher dargestellt. Es zeigt:
- Fig. 1: eine schematische Ansicht einer Beleuchtungseinrichtung für ein Kraftfahrzeug mit einem Gehäuse, in dem elektrische Mittel durch eine Aufnahmevorrichtung gemäß der vorliegenden Erfindung aufgenommen sind,
- Fig. 2: eine schematische Ansicht der Aufnahme des elektrischen Mittels innerhalb der Aufnahmevorrichtung und
- Fig. 3 und Fig. 4: eine Anordnung der Aufnahmevorrichtung innerhalb der Beleuchtungseinrichtung in einer separaten Kammer, die im Gehäuse der Beleuchtungseinrichtung angeordnet ist.

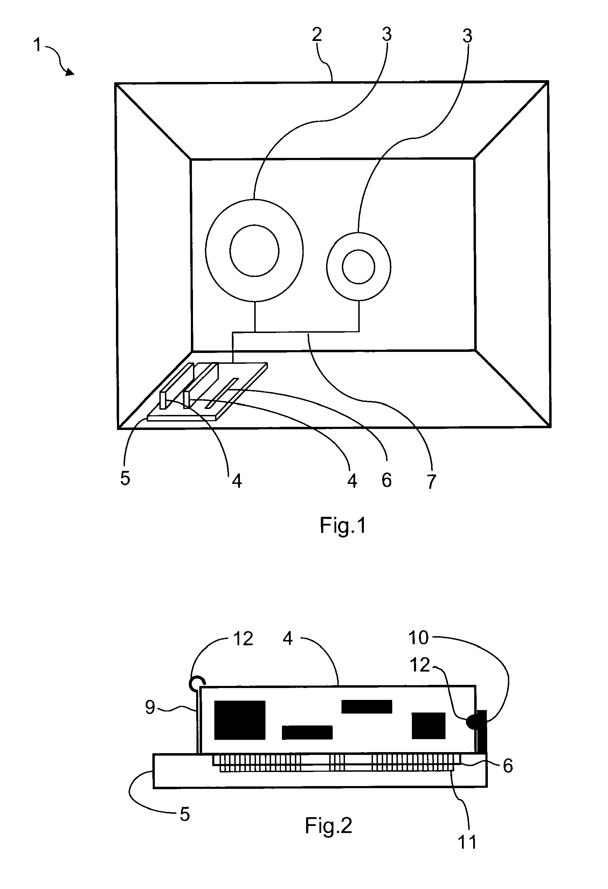

Figur 1 zeigt in schematischer Weise eine Beleuchtungseinrichtung 1 für ein Kraftfahrzeug, die beispielsweise als Frontscheinwerfer oder als Rückleuchte ausgeführt sein kann. Die Beleuchtungseinrichtung 1 besitzt ein Gehäuse 2, in dem wenigstens ein elektrisches Bauelement 3 aufgenommen ist. Vorliegend sind ein Fernlicht und ein Abblendlicht als jeweiliges elektrisches Bauelement 3 schematisch dargestellt. Zur Ansteuerung der elektrischen Bauelemente 3 dienen elektrische Mittel 4, die erfindungsgemäß in einer Aufnahmevorrichtung 5 aufgenommen sind, die innerhalb des Gehäuses 2 der Beleuchtungseinrichtung 1 eingebracht ist. Die elektrischen Mittel 4 sind in Form von elektronischen Steckkarten 4 ausgeführt, und sind senkrecht in Steckaufnahmeplätzen 6 eingesteckt. Beispielhaft sind drei Steckaufnahmeplätze 6 dargestellt, von denen in zwei Steckaufnahmeplätzen 6 jeweils elektrische Mittel 4 eingesteckt sind. Zwischen der Aufnahmevorrichtung 5 und den elektrischen Bauelementen 3 ist eine elektrische Leitungsanordnung 7 eingerichtet, die fest innerhalb des Gehäuses 2 der Beleuchtungseinrichtung 1 eingebracht sein kann.

Figur 2 zeigt in ebenfalls schematischer Weise die Aufnahme eines elektrischen Mittels in der Aufnahmevorrichtung 5, die im Querschnitt dargestellt ist. Das elektrische Mittel 4 besitzt eine Kontaktschiene 11, die sich in den Steckaufnahmeplatz 6 hinein erstreckt, um eine elektrische Kontaktierung zwischen dem elektrischen Mittel 4 und der Aufnahmevorrichtung 5 zu schaffen. Die Kontaktierung erfolgt nach Art eines PCMCIA-Slots, wie diese zwischen einer Modulkarte und der Hauptplatine eines Personalcomputers bekannt ist.

Um eine mechanische Aufnahme des elektrischen Mittels 4 auf der Aufnahmevorrichtung 5 zu schaffen, ist sowohl ein erstes Rastmittel 9 als auch ein zweites Rastmittel 10 vorgesehen. Wenigstens eines der beiden Rastmittel 9 oder 10 kann manuell zwischen einer Öffnungsposition und einer Verschlussposition bewegt werden, um einen Einbau bzw. einen Austausch des elektrischen Mittels aus der Aufnahmevorrichtung 5 zu ermöglichen. Die Rastmittel 9 und 10 besitzen Rastnasen 12, um einen geometrischen Formschluss zum elektrischen Mittel 4 zu ermöglichen.

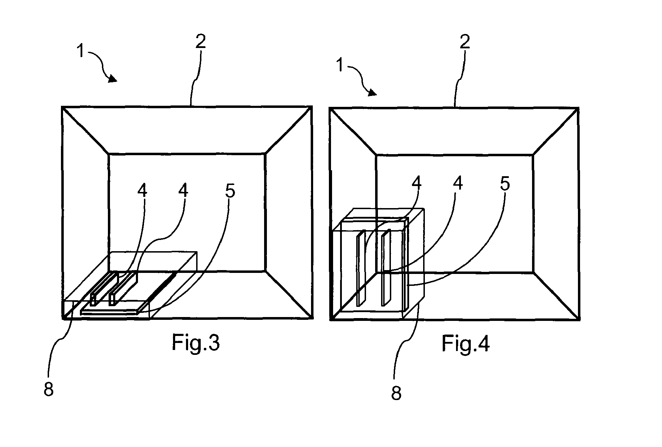

Die Figuren 3 und 4 zeigen eine weitere Ausführungsform der erfindungsgemäßen Anordnung einer Aufnahmevorrichtung 5 innerhalb des Gehäuses 2 einer Beleuchtungseinrichtung 1. Die Aufnahmevorrichtung 5 ist mit zwei elektrischen Mitteln 4 gezeigt, die entweder in einer horizontalen Anordnung auf der Bodenseite des Gehäuses oder in einer vertikalen Anordnung beispielsweise in Richtung zur Rückwand des Gehäuses 2 der Beleuchtungseinrichtung 1 in dieser eingebracht sind. Die Anordnung der Aufnahmevorrichtung 5 erfolgt in einer getrennten Kammer 8 innerhalb des Gehäuses 2 der Beleuchtungseinrichtung 1, die durch eine separate Öffnung im Gehäuse 2 zugänglich sein kann, um einen Austausch der elektrischen Mittel 4 zu ermöglichen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Beispielsweise können mehrere, getrennt voneinander angeordnete Aufnahmevorrichtungen 5 innerhalb eines Gehäuses 2 einer Beleuchtungseinrichtung 1 eingebracht sein. Somit kann ein Xenon-Vorschaltgerät mit einer Hochspannung in einer getrennt angeordneten Aufnahmevorrichtung 5 aufgenommen sein, die räumlich von einer weiteren Aufnahmevorrichtung 5 getrennt ist, die beispielsweise elektromagnetisch empfindliche Elektronik beinhaltet.

### Bezugszeichenliste

- 1: Beleuchtungseinrichtung
- 2: Gehäuse
- 3: elektrisches Bauelement
- 4: elektrisches Mittel
- 5: Aufnahmevorrichtung
- 6: Steckaufnahmeplatz
- 7: Leitungsanordnung
- 8: Kammer
- 9: erstes Rastmittel
- 10: zweites Rastmittel
- 11: Kontaktschiene
- 12: Rastnase

## Patentansprüche

1. Beleuchtungseinrichtung (1) für ein Kraftfahrzeug mit einem Gehäuse (2), in dem wenigstens ein elektrisches Bauelement (3) aufgenommen und das durch wenigstens ein elektrisches Mittel (4) betreibbar ist, **dadurch gekennzeichnet, dass** innerhalb des Gehäuses (2) der Beleuchtungseinrichtung (1) eine Aufnahmevorrichtung (5) vorgesehen ist, mit der das elektrische Mittel (4) mechanisch aufnehmbar und elektrisch mit dem elektrischen Bauelement (3) kontaktierbar ist.

2. Beleuchtungseinrichtung (1) nach Anspruch 1, **dadurch gekennzeichnet, dass** die Aufnahmevorrichtung (5) mehrere Steckaufnahmeplätze (6) aufweist, um nach Art und Anzahl der in der Beleuchtungseinrichtung (1) eingebrachten elektrischen Bauelemente (3) zu diesen korrespondierende elektrische Mittel (4) in der Aufnahmevorrichtung (5) einzubringen.

3. Beleuchtungseinrichtung (1) nach Anspruch 1 oder 2, **dadurch gekennzeichnet, dass** die Aufnahmevorrichtung (5) an der Innenwand des Gehäuses (2) angeordnet ist.

4. Beleuchtungseinrichtung (1) nach einem der Ansprüche 1 bis 3, **dadurch gekennzeichnet, dass** das Gehäuse (2) eine durch eine Servicekappe verschließbare Serviceöffnung aufweist, durch die die Aufnahmevorrichtung (5) derart manuell erreichbar ist, dass ein Austausch eines in der Aufnahmevorrichtung (5) aufgenommenen elektrischen Mittels (4) durch die Serviceöffnung ermöglicht ist.

5. Beleuchtungseinrichtung (1) nach einem der vorgenannten Ansprüche, **dadurch gekennzeichnet, dass** das elektrische Mittel (4) der Gestalt einer elektronischen Steckkarte (4) entspricht und nach Art der elektrischen Bauelemente (3) eine Vorschalt- und/oder Ansteuerfunktion erfüllt.

6. Beleuchtungseinrichtung (1) nach einem der vorgenannten Ansprüche, **dadurch gekennzeichnet, dass** die Beleuchtungseinrichtung (1) als Scheinwerfer eines Kraftfahrzeugs ausgeführt ist, wobei das elektrische Bauelement (3) als ein Leuchtmittel, eine Kurvenlichtstelleinrichtung, eine Umschalteinrichtung für Fern- und Abblendlicht, eine Sensor- und/oder eine Aktoreinheit ausgeführt ist.

7. Beleuchtungseinrichtung (1) nach Anspruch 6, **dadurch gekennzeichnet, dass** das Leuchtmittel ein Xenon-Leuchtmittel ist, wobei das elektrische Mittel (4) ein Vorschaltgerät zum Betrieb des Xenon-Leuchtmittels ist.

8. Beleuchtungseinrichtung (1) nach Anspruch 6, **dadurch gekennzeichnet, dass** das Leuchtmittel ein Dioden-Leuchtmittel ist, wobei das elektrische Mittel (4) eine Elektronikeinheit zum Betrieb des Dioden-Leuchtmittels ist.

9. Beleuchtungseinrichtung (1) nach einem der vorgenannten Ansprüche, **dadurch gekennzeichnet, dass** der Scheinwerfer eine Kurvenlichtfunktion aufweist, wobei das elektrische Bauelement (3) eine Kurvenlichteinheit umfasst und wobei das elektrische Mittel (4) eine Elektronikeinheit zum Betrieb der Kurvenlichteinheit ist.

10. Beleuchtungseinrichtung (1) nach einem der vorgenannten Ansprüche, **dadurch gekennzeichnet, dass** die Beleuchtungseinrichtung (1) als Rückleuchte eines Kraftfahrzeugs ausgeführt ist, wobei das elektrische Mittel (4) zum Betrieb der Rückleuchte dient.

11. Beleuchtungseinrichtung (1) nach einem der vorgenannten Ansprüche, **dadurch gekennzeichnet, dass** zwischen der Aufnahmevorrichtung (5) und den elektrischen Bauelementen (3) eine elektrische Leitungsanordnung (7) vorgesehen ist.

12. Beleuchtungseinrichtung (1) nach einem der vorgenannten Ansprüche, **dadurch gekennzeichnet, dass** das Gehäuse (2) eine separate und vom Hauptinnenraum der Beleuchtungseinrichtung (1) getrennte Kammer (8) aufweist, in der die Aufnahmevorrichtung (5) zur Aufnahme der elektrischen Mittel (4) eingebracht ist.

13. Beleuchtungseinrichtung (1) nach einem der vorgenannten Ansprüche, **dadurch gekennzeichnet, dass** die Aufnahmevorrichtung (5) ein erstes Rastmittel (9) und ein zweites Rastmittel (10) aufweist, mit denen das elektrische Mittel (4) mechanisch aufnehmbar ist.

14. Beleuchtungseinrichtung (1) nach Anspruch 13, **dadurch gekennzeichnet, dass** eine Kontaktschiene (11) vorgesehen ist, über die das elektrische Mittel (4) mit der Aufnahmevorrichtung (5) elektrisch kontaktierbar ist, wobei der elektrische Kontakt in der Kontaktschiene (11) durch die Rastmittel (9, 10) gehalten ist.
